# FASCICULE DE BREVET EUROPEEN

(11) **EP 3 474 293 B1**
(45) Date de publication et mention de la délivrance du brevet: **08.07.2020**
(21) Numéro de dépôt: 18198391.7
(22) Date de dépôt: 03.10.2018
(51) Int. Cl.: H01B 7/295, H01B 3/44, C04B 28/00, C04B 28/04, H01B 3/00

(54) **CÂBLE RESISTANT AU FEU**
FEUERBESTÄNDIGES KABEL
FIRE RESISTANT CABLE

(30) Priorité: 17.10.2017 FR 1759727
(43) Date de publication de la demande: 24.04.2019
(73) Titulaire: Nexans, 92400 Courbevoie (FR)
(72) Inventeur: GYPPAZ, Franck, 69003 LYON (FR); AUVRAY, Thierry, 69006 LYON (FR)
(74) Mandataire: Ipsilon

(56) Documents cités:
- FR-A1- 3 045 201
- FR-A1- 3 049 948
- US-A1- 2008 255 261
- US-A1- 2010 027 948
- US-A1- 2016 133 355

## Description

La présente invention concerne un câble électrique et/ou optique résistant au feu comprenant au moins une couche électriquement isolante composite à base d'au moins un matériau cimentaire et d'au moins un matériau polymère organique expansé, et son procédé de fabrication.

Elle s'applique typiquement mais non exclusivement aux câbles électriques et/ou optiques destinés au transport d'énergie et/ou à la transmission de données, en particulier aux câbles électriques et/ou optiques de sécurité résistants au feu, notamment sans halogène, susceptibles de fonctionner pendant un laps de temps donné dans des conditions d'incendie, sans être pour autant propagateur d'incendie ni générateur de fumées importantes. Ces câbles de sécurité sont en particulier des câbles de transport d'énergie moyenne tension (notamment de 6 à 45-60 kV) ou des câbles de transmission basse fréquence, tels que des câbles de contrôle ou de signalisation.

Un câble d'énergie et/ou de télécommunication est un câble destiné au transport de l'énergie et/ou à la transmission de données. Il comprend classiquement un ou plusieurs éléments conducteurs isolés, ou en d'autres termes un ou plusieurs conducteur(s) (électrique(s) et/ou optique(s)) allongé(s) entouré(s) par au moins une couche électriquement isolante. La couche électriquement isolante peut être typiquement une couche polymère électriquement isolante en contact physique avec le ou les conducteur(s) électrique(s) et/ou optique(s). Ledit ou lesdits éléments conducteurs isolés sont entourés par une gaine extérieure de protection destinée à protéger mécaniquement le ou les éléments conducteurs isolés. Dans certaines constructions de câbles, il n'y a qu'une seule couche qui assure les deux fonctions d'isolant électrique et de gaine de protection.

Les matériaux généralement utilisés pour former la couche électriquement isolante et/ou ladite gaine de protection sont des matériaux composites à base de polymères, en particulier de polymères siliconés, et de divers additifs, notamment des charges de renfort telles que de la silice, et des charges ignifugeantes destinées à améliorer leur résistance au feu.

Malgré la présence de telles charges, la résistance au feu de ces couches électriquement isolantes ne donne pas toujours entièrement satisfaction.

Afin de rendre un câble résistant au feu, il a également été proposé, notamment dans la demande de brevet EP 2 760 030 A1, de recouvrir ledit câble d'une couche électriquement isolante comprenant plusieurs bandes isolantes superposées comprenant du mica et des fibres de verre, et un liant polymère (e.g. polyorganosiloxane) au contact de chacune desdites bandes isolantes. Toutefois, le coût de production de ladite couche électriquement isolante est élevé (e.g. temps de préparation très long) et celle-ci présente un grand encombrement.

D'autres matériaux tels que la pierre, la brique, le ciment, le plomb, l'acier, le béton, la laine de roche, les céramiques, les géopolymères, etc... ont des propriétés de résistance au feu.

Le ciment est une matière minérale pulvérulente formant avec l'eau ou avec une solution saline une pâte de ciment liante, capable d'agglomérer, en durcissant, des substances variées. Le durcissement se produit par simple hydratation d'aluminates de calcium et de silicates de calcium et la pâte de ciment liante conserve après durcissement, sa résistance et sa stabilité. Cette pâte de ciment liante est également appelée matériau cimentaire. Les ciments sont classés selon la norme EN-197-1-2000 en cinq grandes familles : le ciment Portland (CEM I), le ciment portland composé (CEM II), le ciment de hauts fourneaux (CEM III), le ciment pouzzolanique (CEM IV) et le ciment composé ou ciment au laitier et aux cendres (CEM V). Le ciment blanc est un ciment Portland sans oxyde métallique. Le ciment artificiel est généralement obtenu par cuisson de mélanges de silice, d'alumine, de carbonate de chaux, et éventuellement d'oxydes métalliques tels que l'oxyde de fer.

Les géopolymères sont considérés comme des liants alternatifs pouvant se substituer aux matériaux cimentaires précités. Les géopolymères sont essentiellement des composés chimiques minéraux ou des mélanges de composés constitués de motifs de type silico-oxyde (-Si-O-Si-O-), silico-aluminate (-Si-O-Al-O-), ferro-silico-aluminate (-Fe-O-Si-O-Al-O-), ou alumino-phosphate (-Al-O-P-O-), créés par un processus de géopolymérisation (i.e. polycondensation). Les géopolymères peuvent être utilisés seuls ou en mélange avec des polymères organiques, des fibres minérales, métalliques, ou organiques (e.g. fibres de verre, fibres céramiques, etc...), du carbone, du graphite, etc... selon le type d'application recherchée. Les géopolymères sont généralement capables de polymériser et de durcir à la température ambiante (ciments géopolymères). Il est également possible d'accélérer la vitesse de polymérisation et donc le durcissement des géopolymères en les soumettant à un traitement thermique.

Les géopolymères les plus courants sont ceux basés sur les aluminosilicates désignés sous le terme « poly(sialate) » [ou « poly(silico-oxo-aluminate » ou (-Si-O-Al-O-)ₙ avec n désignant le degré de polymérisation]. Ces géopolymères aluminosilicates résultent de la polycondensation d'oligomères de type oligo(sialate) formés à partir d'un mélange d'au moins un aluminosilicate, d'un réactif alcalin (e.g. silicate de sodium ou de potassium) et d'eau. Les géopolymères basés sur les aluminosilicates ont été groupés en trois familles en fonction du rapport atomique Si/Al, lequel pouvant être égal à 1, 2 ou 3. On distingue les poly(sialates) répondant à la formule Mₙ(-Si-O-Al-O-)ₙ ou (M)-PS, les poly(sialate-siloxos) répondant à la formule Mₙ(-Si-O-Al-O-Si-O-)ₙ ou (M)-PPS, et les poly(sialate-disiloxos) répondant à la formule Mₙ(-Si-O-Al-O-Si-O-Si-O)ₙ ou (M)-PSDS, avec M représentant au moins un cation alcalin ou alcalino-terreux tel que K, Na, Li, Cs ou Ca et n désignant le degré de polymérisation.

Les ciments géopolymères sont utilisés dans de nombreuses applications : conception de nouveaux matériaux dans les domaines du génie civil et de la construction, création de sculptures, fabrication de cloisons et de portes coupe-feu pour la protection contre les incendies, et tout récemment comme structure de la « boîte noire » embarquée dans les avions.

A titre d'exemple, US 2012/0094028 A1 décrit une composition composite géopolymère-résine époxyde qui peut être utilisée comme revêtement d'un substrat, mortier, adhésif ou matériau de moulage. La composition composite est préparée par mélange d'une première composition comprenant un agent de réticulation de la résine époxyde, une source d'un aluminosilicate et de la silice amorphe avec une deuxième composition comprenant une résine époxyde et une solution de silicate alcalin ; et réticulation du mélange à température ambiante.

Cependant, la solution décrite ci-dessus n'est pas adaptée, notamment en termes de flexibilité, d'adhérence et de protection thermique, pour pouvoir servir de couche électriquement isolante et résistante au feu dans un câble d'énergie et/ou de transmission de données, notamment lors d'un incendie. Par ailleurs, elle n'est pas forcément compatible avec la conservation des bonnes propriétés mécaniques et diélectriques des autres constituants d'un câble d'énergie et/ou de transmission de données (élément conducteur électrique et/ou optique, autres couches électriquement isolantes, écrans, etc...).

Les documents FR 3 049 948 A1 et FR 3 045 201 A1 décrivent des câbles d'énergie comprenant une couche composite électriquement isolante comprenant un matériau polymère organique et un matériau cimentaire.

Le but de la présente invention est de pallier les inconvénients des techniques de l'art antérieur en proposant un câble d'énergie et/ou de télécommunication présentant une bonne résistance au feu, tout en garantissant de bonnes propriétés mécaniques, notamment en termes de flexibilité, et un coût de revient avantageux.

Un autre but de l'invention est de fournir un procédé de fabrication d'un câble résistant au feu simple, économique, facile à mettre en œuvre, et permettant de conduire à un câble qui évite la propagation de la flamme, résiste au feu afin de fonctionner le plus longtemps possible, et limite sa dégradation dans des conditions thermiques extrêmes telles qu'un incendie, tout en garantissant de bonnes propriétés mécaniques, notamment en termes de flexibilité.

La présente invention a pour premier objet un câble d'énergie et/ou de télécommunication comprenant au moins un élément conducteur allongé et au moins une couche composite électriquement isolante entourant ledit élément conducteur allongé, caractérisé en ce que la couche composite électriquement isolante comprend un matériau polymère organique comportant des cellules ouvertes et/ou semi-ouvertes, et un matériau cimentaire remplissant au moins une partie desdites cellules ouvertes et/ou semi-ouvertes.

Grâce à la présence de la couche composite électriquement isolante, le câble de l'invention présente une bonne résistance au feu tout en ayant de bonnes propriétés mécaniques. En particulier, la couche composite électriquement isolante est suffisamment flexible pour permettre la manipulation du câble (e.g. enroulage, pliage, torsion) sans pour autant entrainer d'altération rédhibitoire de ladite couche qui aurait pour conséquence de diminuer sa cohésion et sa résistance au feu. Par ailleurs, la couche composite électriquement isolante reste intacte de la température ambiante à des températures supérieures ou égales à 1000°C pendant une durée pouvant aller jusqu'à 120 min, notamment atteintes lors d'un incendie.

Dans la présente invention, l'expression « matériau polymère organique comportant des cellules ouvertes et/ou semi-ouvertes » signifie un matériau polymère organique comportant des pores qui ne sont pas scellés et forment un réseau interconnecté. Un tel matériau polymère organique est différent d'un matériau polymère organique massif. Il contient (avant remplissage de ses cellules ouvertes et/ou semi-ouvertes par le matériau cimentaire) un volume important de gaz (i.e. il contient des pores remplis de gaz), et présente donc une porosité élevée, en général allant de 50 à 80% en volume, par rapport au volume total du matériau polymère organique.

Lorsque les cellules sont semi-ouvertes, les pores communiquent entre eux par des orifices de dimension très inférieure à leur taille moyenne.

Dans la présente invention, le matériau polymère organique est un matériau polymère organique expansé ou moussé.

Les cellules ouvertes et/ou semi-ouvertes peuvent présenter une taille moyenne allant de 200 µm à 2 mm environ, et de préférence de 500 µm à 1,2 mm environ.

La couche composite électriquement isolante du câble de l'invention est une couche biphasique comprenant une première phase constituée du matériau polymère organique et une deuxième phase constituée du matériau cimentaire et occupant les cellules ouvertes et/ou semi-ouvertes dudit matériau polymère organique (lesdites cellules communiquant entre-elles).

Dans la couche composite électriquement isolante du câble de la présente invention, les cellules ouvertes et/ou semi-ouvertes sont au moins en partie, et de préférence complètement remplies dudit matériau cimentaire.

Dans la présente invention, l'expression « matériau cimentaire » signifie un matériau solide inorganique obtenu sans étape de frittage et à partir d'au moins une étape de durcissement ou de prise, notamment par hydratation ou par polycondensation.

Le matériau cimentaire de l'invention est par conséquent différent d'une céramique. En effet, une céramique se distingue d'un matériau cimentaire en ce qu'elle est obtenue à partir d'au moins une étape de frittage (densification d'une poudre sous l'effet de la chaleur).

Le matériau cimentaire de l'invention comprend de préférence :
- du silicium (Si),
- de l'aluminium (Al) ou du magnésium (Mg),
- de l'oxygène (O), et
- au moins un élément choisi parmi le potassium (K), le sodium (Na), le lithium (Li), le césium (Cs) et le calcium (Ca).

L'aluminium (Al) est préféré.

Selon une forme de réalisation particulièrement préférée de l'invention, le matériau cimentaire comprend un ciment géopolymère ou est issu (i.e. est obtenu à partir) d'au moins un mélange constitué d'un ciment anhydre conventionnel et d'eau ou d'au moins un mélange constitué d'un silicate de magnésium, d'un silicate alcalin, d'une base alcaline et d'eau.

Avantageusement, le câble conforme à l'invention satisfait à au moins l'une quelconque des normes de résistance au feu suivantes : EN50200, IEC60331-1, EN50399, IEC60331-11, IEC60331-21, IEC60331-23, IEC60331-25, DIN4102, NBN713020 addendum 3, EN50577, IEC600332-1, NFC32070 CR1 et BS6387CWZ.

Avantageusement, la couche composite électriquement isolante définie précédemment satisfait à la norme de résistance au feu IEC 60331-1.

La couche composite de l'invention se transforme sous l'effet d'une température élevée, notamment une température supérieure à 1000°C généralement atteinte lors d'un incendie, pour former une couche résiduelle cohésive qui protège le câble, et notamment les couches sous-jacentes et/ou l'élément conducteur allongé.

La couche composite électriquement isolante présente de préférence une épaisseur sensiblement constante et constitue notamment une enveloppe de protection continue.

La couche composite électriquement isolante présente de préférence une épaisseur allant de 0,1 à 3 mm environ, et de préférence encore allant de 0,5 à 2 mm environ.

Lorsque l'épaisseur de la couche composite électriquement isolante est inférieure à 0,3 mm, la résistance au feu de ladite couche n'est pas assurée et la protection thermique du câble de l'invention n'est pas suffisante.

Le matériau polymère organique comporte des cellules ouvertes ou semi-ouvertes. Les cellules ouvertes sont toutefois préférées afin d'optimiser la résistance au feu du câble (e.g. le remplissage des cellules est facilité).

Les cellules ouvertes et/ou semi-ouvertes du matériau polymère organique sont de préférence au moins en partie, et de préférence majoritairement, localisées en surface de la couche composite électriquement isolante. Cela permet ainsi d'améliorer encore la résistance au feu du câble.

Selon une première forme de réalisation de l'invention, le matériau cimentaire est issu d'au moins un mélange constitué d'un ciment anhydre conventionnel et d'eau. Le durcissement provient alors de l'hydratation de silicates de calcium et d'aluminates de calcium.

Le ciment anhydre peut être du ciment Portland, et en particulier du ciment blanc ou du ciment au laitier et aux cendres. Les ciments précités sont bien connus de l'homme du métier.

Selon une deuxième forme de réalisation de l'invention, le matériau cimentaire comprend un ciment géopolymère.

Dans la présente invention, le terme « ciment géopolymère » ou « durcissement d'une composition géopolymère » indique que le durcissement s'effectue par réaction interne du type polycondensation ou du type hydrothermal et qu'il n'est pas le résultat d'un simple séchage, comme c'est généralement le cas pour des liants à base de silicates alcalins.

En effet, les ciments géopolymères résultent d'une réaction de polycondensation minérale par activation alcaline, dite géosynthèse, par opposition aux liants traditionnels hydrauliques dans lesquels le durcissement est le résultat d'une hydratation des aluminates de calcium et des silicates de calcium.

Le ciment géopolymère peut être un ciment géopolymère aluminosilicate, notamment pouvant présenter un rapport molaire Si/Al allant de 1 à 35.

Le ciment géopolymère aluminosilicate peut être choisi parmi les poly(sialates) répondant à la formule (I) Mₙ(-Si-O-Al-O-)ₙ [(M)-PS], les poly(sialate-siloxos) répondant à la formule (II) Mₙ(-Si-O-Al-O-Si-O-)ₙ [(M)-PPS], et les poly(sialate-disiloxos) répondant à la formule (III) Mₙ(-Si-O-Al-O-Si-O-Si-O)ₙ [(M)-PSDS], formules dans lesquelles M représente au moins un cation alcalin K, Na, Li, Cs ou un de leurs mélanges, et n désignant le degré de polymérisation. Dans le composé de formule (I), le rapport molaire Si/Al est de 1, dans le composé de formule (II), le rapport molaire Si/Al est de 2, et dans le composé de formule (III), le rapport molaire Si/Al est de 3.

Le rapport molaire Si/Al influence les propriétés mécaniques du ciment géopolymère, en particulier ses propriétés de résistance à une contrainte mécanique. Selon une forme de réalisation préférée de l'invention, le ciment géopolymère est choisi parmi les composés dans lesquels le rapport molaire Si/Al va de 1,9 à 3 environ et encore plus préférentiellement de 1,9 à 2,5 environ. Le choix de ces ciments géopolymères permet d'avoir une couche composite électriquement isolante résistante au feu tout en étant assez flexible pour permettre au câble conforme à l'invention d'être manipulé sans entrainer de fissures de ladite couche composite électriquement isolante.

Lorsqu'il est utilisé, le ciment géopolymère représente au moins 50% en masse environ, de préférence au moins 70% en masse environ, et de préférence encore au moins 90% en masse environ, de la masse totale du matériau cimentaire.

Un matériau cimentaire selon les première et deuxième formes de réalisation définies ci-dessus comprend du silicium (Si), de l'aluminium (Al), de l'oxygène (O), et au moins un élément choisi parmi le potassium (K), le sodium (Na), le lithium (Li), le césium (Cs) et le calcium (Ca).

Selon une troisième forme de réalisation de l'invention, le matériau cimentaire est issu d'au moins un mélange constitué d'un silicate de magnésium, d'un silicate alcalin, d'une base alcaline et d'eau.

Un matériau cimentaire selon la troisième forme de réalisation définie ci-dessus comprend du silicium (Si), du magnésium (Mg), de l'oxygène (O), et au moins un élément choisi parmi le potassium (K), le sodium (Na), le lithium (Li), le césium (Cs) et le calcium (Ca).

Selon l'invention, le matériau cimentaire représente de préférence de 30 à 80% en masse environ, et encore plus préférentiellement de 50 à 70% en masse environ, par rapport à la masse totale de ladite couche composite électriquement isolante.

Le matériau cimentaire de la couche composite peut comprendre en outre au moins un agent retardant la prise en masse à température ambiante de la composition cimentaire telle que définie ci-après et qui permet à celle-ci de rester malléable plus longtemps.

Un tel agent retardateur peut être choisi parmi l'ammonium, les métaux alcalins, les métaux alcalino-terreux, le borax, les lignosulfonates et en particulier les sels de métaux de lignosulfonates, la cellulose et ses dérivés tels que l'acétate de cellulose ou la carboxyméthyl hydroxyéthyl cellulose, les lignines sulfoalkylées telles que la lignine sulfométhylée, les acides hydroxycarboxyliques, les copolymères de sels d'acide 2-acrylamido-2-méthylpropane sulfonique et d'acide acrylique ou d'acide maléique, les sels saturés, et leurs mélanges.

Selon une forme de réalisation particulièrement préférée de l'invention, l'agent retardateur est choisi parmi les lignosulfonates.

Lorsqu'il est utilisé, l'agent retardateur représente de préférence de 0,3 à 3% en masse environ, et encore plus préférentiellement de 0,5 à 2% en masse environ, par rapport à la masse totale du matériau cimentaire.

Le matériau cimentaire peut comprendre en outre au moins une charge inerte CI₁, notamment choisi parmi le talc, les micas, les argiles déshydratées et un de leurs mélanges.

Le talc est préféré.

Lorsqu'elle est utilisée, la charge inerte représente de préférence de 10 à 45% en masse environ, par rapport à la masse totale du matériau cimentaire.

Le matériau cimentaire de la couche composite peut comprendre en outre au moins un composé accélérant la prise en masse (i.e. le durcissement) à température ambiante de la composition cimentaire telle que définie ci-après.

A titre d'exemples de composés accélérant la prise, on peut citer le sulfate d'aluminium, les aluns (e.g. sulfate double d'aluminium et de potassium), le chlorure de calcium, le sulfate de calcium, le sulfate de calcium hydraté, l'aluminate de sodium, le carbonate de sodium, le chlorure de sodium, le silicate de sodium, le sulfate de sodium, le chlorure de fer (III) ou un de leurs mélanges.

Le matériau cimentaire de la couche composite peut comprendre en outre au moins un dispersant.

A titre d'exemples de dispersants, c'est-à-dire des composés qui permettent d'améliorer les propriétés rhéologiques de la composition cimentaire, on peut citer un condensat d'acide naphtalène sulfonique-formaldéhyde, un condensat d'acétone-formaldéhyde-sulfite, un condensat de sulfonate de mélamine-formaldéhyde, ou un de leurs mélanges.

L'agent retardateur, le composé accélérateur, le dispersant et la charge inerte CI₁ ne doivent pas altérer les propriétés électriques (e.g. résistance au feu) et mécaniques (e.g. résistance à une contrainte mécanique) du matériau cimentaire.

Le matériau polymère organique de la couche composite représente de préférence de 20 à 70% en masse environ, et encore plus préférentiellement de 30 à 50% en masse environ, par rapport à la masse totale de ladite couche composite électriquement isolante.

Le matériau polymère organique de la couche composite peut comprendre un ou plusieurs polymère(s) organique(s) PO₁, notamment un ou plusieurs polymère(s) organique(s) d'oléfine(s) (i.e. polyoléfine(s)).

Un polymère d'oléfine est classiquement un polymère obtenu à partir d'au moins un monomère d'oléfine.

Le terme « polymère » peut s'entendre par tout type de polymère bien connu de l'homme du métier tel qu'un homopolymère ou un copolymère (e.g. copolymère séquencé, copolymère statistique, terpolymère, ..etc).

Un polymère est classiquement issu de l'enchaînement covalent d'un grand nombre de motifs monomères identiques ou différents, et plus particulièrement issu de l'enchaînement covalent de plus de 40 motifs monomères identiques ou différents.

Le polymère organique PO₁ du matériau de l'invention peut être du type thermoplastique ou élastomère, et peut être réticulé par des techniques étant bien connues de l'homme du métier.

Selon une forme de réalisation de l'invention, le matériau polymère organique entrant dans la composition de ladite couche composite électriquement isolante selon l'invention comprend un ou plusieurs polymère(s) organique(s) PO₁ choisis parmi les polyéthylènes linéaires basse densité (LLDPE) ; les polyéthylènes très basse densité (VLDPE) ; les polyéthylènes basse densité (LDPE) ; les polyéthylènes moyenne densité (MDPE) ; les polyéthylènes haute densité (HDPE) ; les copolymères d'éthylène-propylène (EPR) ; les terpolymères éthylène propylène diène monomères (EPDM) ; les copolymères d'éthylène et de vinyle ester tels que les copolymères d'éthylène et d'acétate de vinyle (EVA) ; les copolymères d'éthylène et d'acrylate tels que les copolymères d'éthylène et d'acrylate de butyle (EBA) ou les copolymères d'éthylène et d'acrylate de méthyle (EMA) ; les copolymères d'éthylène et d'alpha-oléfine tels que les copolymères d'éthylène et d'octène (PEO) ou les copolymères d'éthylène et de butène (PEB) ; les polymères d'oléfine fonctionnalisés ; les polypropylènes ; les copolymères du propylène ; les copolymères de styrène-butadiène (SBR) ; les copolymères de styrène-butadiène-éthylène (EBS) ; et tous les dérivés des copolymères de styrène-éthylène, notamment ceux commercialisés par Kraton tels que les copolymères de styrène-éthylène-butylène-styrène (SEBS), les copolymères de styrène-butadiène-styrène (SBS), les copolymères de styrène-isoprène-styrène (SIS), les copolymères de styrène-propylène-éthylène (EPS) ou les copolymères de styrène-éthylène-propylène-styrène (SEPS).

Le polymère organique PO₁ du matériau polymère organique est de préférence un copolymère d'éthylène et de vinyle ester, et de préférence encore un copolymère d'éthylène et d'acétate de vinyle (EVA).

Le polymère organique PO₁ représente de préférence de 30 à 90% en masse environ, et de préférence encore de 55 à 90% en masse environ, par rapport à la masse totale du matériau polymère organique.

Le matériau polymère organique avant remplissage par le matériau cimentaire peut avoir un taux de porosité d'au moins 50% en volume environ, et de préférence d'au moins 60% en volume environ, par rapport au volume total du matériau polymère organique.

La couche composite électriquement isolante peut avoir un taux de porosité d'au plus 30% en volume environ, et de préférence d'au plus 10% en volume environ, par rapport au volume total de la couche composite électriquement isolante.

Le matériau polymère organique de la couche composite peut comprendre en outre au moins un additif organique à structure polymère. Cet additif est destiné à améliorer la cohésion de la couche composite et son adhérence sur la couche du câble avec laquelle elle est destinée à être en contact physique direct.

L'additif organique à structure polymère est de préférence choisi parmi les fibres de polyoléfine telles que les fibres de polypropylène, une huile silicone de faible viscosité (e.g. de l'ordre de 12500 cPo), une huile polyéthylène, et un de leurs mélanges.

Lorsqu'il est utilisé, l'additif organique à structure polymère représente de préférence de 0,2 à 4% en masse environ, et encore plus préférentiellement de 0,5 à 2% en masse environ, par rapport à la masse totale du matériau polymère organique, notamment selon l'application et la flexibilité recherchée.

Le matériau polymère organique de la couche composite peut comprendre en outre au moins un colorant, notamment un colorant choisi parmi la gamme de masterbatchs commerciaux distribués par la société PolyOne.

Lorsqu'il est utilisé, le colorant représente de préférence de 1 à 3% en masse environ, par rapport à la masse totale du matériau polymère organique.

Le matériau polymère organique peut comprendre en outre au moins une charge inerte Cl₂, notamment choisi parmi le talc, le carbonate de calcium, et un de leurs mélanges.

Le talc est préféré.

Lorsqu'elle est utilisée, la charge inerte représente de préférence de 10 à 45% en masse environ par rapport à la masse totale du matériau polymère organique.

Le matériau polymère organique peut comprendre en outre au moins une charge minérale ignifugeante hydratée. Cette charge minérale ignifugeante hydratée agit principalement par voie physique en se décomposant de manière endothermique (e.g. libération d'eau), ce qui a pour conséquence d'abaisser la température du matériau polymère organique et de limiter la propagation des flammes le long du câble. On parle notamment de propriétés de retard à la flamme, bien connues sous l'anglicisme « *flame retardant* ».

La charge minérale ignifugeante hydratée peut être un hydroxyde métallique tel que l'hydroxyde de magnésium ou le trihydroxyde d'aluminium.

Lorsqu'elle est utilisée, la charge minérale ignifugeante hydratée représente de préférence de 10 à 70% en masse environ, par rapport à la masse totale du matériau polymère organique.

L'additif organique à structure polymère, le colorant, la charge minérale ignifugeante hydratée, et la charge inerte Cl₂ ne doivent pas altérer les propriétés mécaniques (e.g. résistance à une contrainte mécanique, flexibilité, adhérence) du matériau polymère organique.

Selon une forme de réalisation de l'invention, la couche composite électriquement isolante est constituée dudit matériau polymère organique comportant des cellules ouvertes et/ou semi-ouvertes et dudit matériau cimentaire remplissant au moins une partie desdites cellules ouvertes et/ou semi-ouvertes.

La couche composite électriquement isolante de l'invention est de préférence une couche interne du câble de l'invention.

Selon l'invention, on entend par « couche interne », une couche qui ne constitue pas la couche la plus externe du câble. Plus particulièrement, une couche interne est une couche interposée entre l'élément conducteur allongé et une gaine externe de protection, notamment électriquement isolante, ladite couche étant ou non en contact physique direct avec l'élément conducteur allongé.

La couche composite du câble de l'invention recouvre généralement un ou plusieurs conducteurs ou se positionne sur une gaine ou couche interne du câble, elle fait alors office de bourrage.

La couche composite électriquement isolante de l'invention est de préférence en contact physique direct avec l'élément conducteur allongé.

Le câble peut comprendre une pluralité d'éléments conducteurs allongés. La couche composite électriquement isolante peut alors entourer la pluralité d'éléments conducteurs allongés du câble.

La couche composite électriquement isolante de l'invention est de préférence en contact physique direct avec les éléments conducteurs allongés.

Le câble peut comprendre une pluralité de couches composites électriquement isolantes telles que définies dans l'invention.

Selon une première variante de ce mode de réalisation, le câble comprend un élément conducteur allongé et la pluralité de couches composites entoure ledit élément conducteur allongé.

Selon une deuxième variante de ce mode de réalisation, le câble comprend une pluralité d'éléments conducteurs allongés et chacune des couches composites électriquement isolantes entoure individuellement chacun des éléments conducteurs allongés pour former des éléments conducteurs allongés isolés.

Selon cette deuxième variante, chacune des couches composites électriquement isolantes de l'invention est de préférence en contact physique direct avec chacun des éléments conducteurs allongés qu'elle entoure.

Le ou les éléments conducteurs allongés du câble de l'invention sont de préférence des éléments électriquement conducteurs allongés. Le câble est par conséquent de préférence un câble électrique.

Le câble de l'invention peut comprendre en outre une gaine externe de protection, notamment électriquement isolante, entourant la ou les couche(s) composite(s).

La gaine externe de protection est de préférence réalisée en un matériau exempt d'halogène. Elle peut être réalisée classiquement à partir de matériaux retardant la propagation de la flamme ou résistant à la propagation de la flamme. Notamment, si ces derniers ne contiennent pas d'halogène, on parle de gainage de type HFFR (pour l'anglicisme « *Halogen Free Flame Retardant »).*

La gaine représente la couche la plus externe du câble (i.e. également appelée gaine extérieure de protection).

Elle comprend au moins un polymère organique PO₂ ou inorganique PI.

Le choix du polymère organique PO₂ ou inorganique PI n'est pas limitatif et ceux-ci sont bien connus de l'homme du métier.

Selon une forme de réalisation préférée de l'invention, le polymère organique PO₂ ou inorganique PI est choisi parmi les polymères réticulés et non réticulés.

Le polymère organique PO₂ ou inorganique PI peut être un homo- ou un co-polymère ayant des propriétés thermoplastiques et/ou élastomères.

Les polymères inorganiques PI peuvent être des polyorganosiloxanes.

Les polymères organiques PO₂ peuvent être des polyuréthanes ou des polyoléfines.

Les polyoléfines peuvent être choisies parmi les polymères d'éthylène et de propylène. A titre d'exemple de polymères d'éthylène, on peut citer le polyéthylène linéaire basse densité (LLDPE), le polyéthylène basse densité (LDPE), le polyéthylène moyenne densité (MDPE), le polyéthylène haute densité (HDPE), les copolymères d'éthylène et d'acétate de vinyle (EVA), les copolymères d'éthylène et d'acrylate de butyle (EBA), d'acrylate de méthyle (EMA), de 2-hexyléthyl acrylate (2HEA), les copolymères d'éthylène et d'alpha-oléfines tels que par exemple les polyéthylène-octène (PEO), les copolymères d'éthylène et de propylène (EPR), les terpolymères d'éthylène et de propylène (EPT) tels que par exemple les terpolymères d'éthylène propylène diène monomère (EPDM) ou un de leurs mélanges.

Le polymère de la gaine est de préférence un polymère organique PO₂, de préférence encore un polymère d'éthylène, et de préférence encore un copolymère d'éthylène et d'acétate de vinyle, un polyéthylène linéaire basse densité ou un de leurs mélanges.

La gaine externe de protection peut comprendre en outre une charge minérale ignifugeante hydratée telle que définie dans l'invention.

La gaine externe de protection peut comprendre en outre une charge inerte Cl₂ telle que définie dans l'invention.

La présente invention a pour deuxième objet un procédé de fabrication d'un câble conforme au premier objet de l'invention, caractérisé en ce qu'il comprend au moins les étapes suivantes :
i) la formation d'un matériau polymère organique comportant des cellules ouvertes et/ou semi-ouvertes autour d'au moins un élément conducteur allongé, à partir d'une composition polymère organique comprenant au moins un polymère organique PO₁ tel que défini dans le premier objet de l'invention et au moins un agent moussant,
ii) le remplissage d'au moins une partie desdites cellules ouvertes et/ou semi-ouvertes par une composition cimentaire, et
iii) le durcissement de la composition cimentaire pour former une couche composite électriquement isolante telle que définie dans le premier objet de l'invention.

Le procédé conforme à l'invention est rapide, simple et avantageux d'un point de vue économique. Il permet de fabriquer en peu d'étapes un câble présentant une bonne résistance au feu, tout en garantissant de bonnes propriétés mécaniques, notamment en termes de flexibilité.

L'étape i) est de préférence effectuée par chauffage de ladite composition polymère organique, notamment à une température supérieure à la température de fusion du polymère organique PO₁, et expansion (ou moussage) de la composition polymère organique chauffée autour d'au moins un élément électriquement conducteur allongé.

Lors de l'étape i), le polymère organique PO₁ fond et l'agent moussant libère un gaz qui est capable d'éclater ledit polymère organique PO₁ et de former un matériau polymère organique comportant des cellules ouvertes et/ou semi-ouvertes.

Selon une forme de réalisation particulièrement préférée de l'invention, l'étape i) est effectuée par extrusion à chaud de ladite composition polymère organique, notamment à une température allant de 100 à 230°C environ, et de préférence de 150°C à 210°C environ.

Selon ce mode de réalisation, l'agent moussant se décompose dans l'extrudeuse et le gaz libéré par l'agent moussant se solubilise dans le polymère organique PO₁ fondu et s'étend jusqu'à la sortie de la filière pour former la structure moussée ou expansé (i.e. le matériau polymère organique comportant des cellules ouvertes ou semi-ouvertes).

L'étape i) est également appelée étape de « moussage » ou d'expansion. Elle est bien connue de l'homme du métier, notamment sous l'anglicisme « *foaming* ».

Le moussage peut être caractérisé par la mesure du taux de porosité du matériau polymère organique avant l'étape ii) de remplissage.

L'agent moussant (ou agent d'expansion) de ladite composition polymère organique est capable de former des cellules ouvertes et/ou semi-ouvertes au sein dudit matériau polymère organique.

L'agent moussant (également connu sous l'anglicisme « foaming agent ») peut être choisi parmi les phyllosilicates hydratés telles que la bentonite, la montmorillonite, et d'autres argiles gonflantes, notamment celles présentant une structure en feuillets ou en tubes.

A titre d'exemple d'argile gonflante présentant une structure en tubes, on peut citer la sépiolite.

La structure des phyllosilicates hydratés est caractérisée par la superposition de feuillets composés de couches tétraédriques (tétraèdre d'atomes d'oxygène et un atome de silicium au centre) et de couches octaédriques (octaèdre d'atomes d'oxygène et un atome d'aluminium au centre).

Lorsque l'agent moussant est un phyllosilicate hydraté, l'eau contenue dans les feuillets est libérée (coupure des liaisons de Van der Waals induisant la séparation des feuillets et donc le dégagement d'eau), permettant ainsi d'éclater en surface le polymère organique en sortie d'extrudeur, ce qui forme la structure alvéolaire.

La bentonite est préférée.La quantité d'agent moussant détermine le taux d'expansion. La composition polymère organique de l'étape i) comprend de préférence au moins 2% en masse environ d'agent moussant, et de préférence encore au moins 5% en masse environ d'agent moussant, par rapport à la masse totale de la composition polymère organique.

La composition polymère organique de l'étape i) peut comprendre en outre au moins un co-agent d'expansion, notamment choisi parmi le bicarbonate de sodium, l'azodicarbonamide et un de leurs mélanges.

La composition polymère organique de l'étape i) peut comprendre en outre au moins une charge inerte Cl₂ et/ou au moins une charge minérale ignifugeante hydratée et/ou au moins un colorant et/ou au moins un additif organique à structure polymère, les composés précités étant tels que définis dans le premier objet de l'invention.

Au cours de l'étape ii), la composition cimentaire remplit au moins en partie, et de préférence complètement, les cellules ouvertes et/ou semi-ouvertes du matériau polymère organique.

Dans la présente invention, le terme « composition cimentaire » signifie une composition liquide ou pâteuse permettant de former après durcissement ou prise (sans étape de frittage) le matériau cimentaire tel que défini dans le premier objet de l'invention. Le durcissement ou la prise peut se faire par polycondensation ou hydratation.

La composition cimentaire de l'invention est par conséquent différente d'une composition ou poudre céramique.

La composition cimentaire de l'étape ii) comprend de préférence :
- de l'eau,
- du silicium (Si),
- de l'aluminium (Al) ou du magnésium (Mg),
- de l'oxygène (O), et
- au moins un élément choisi parmi le potassium (K), le sodium (Na), le lithium (Li), le césium (Cs) et le calcium (Ca).

L'aluminium (Al) est préféré.

Selon une forme de réalisation particulièrement préférée de l'invention, la composition cimentaire est une composition comprenant au moins un mélange géopolymère, une composition comprenant au moins un mélange constitué d'un ciment anhydre conventionnel et d'eau, ou une composition comprenant au moins un mélange constitué d'un silicate de magnésium, d'un silicate alcalin, d'une base alcaline et d'eau.

Selon une première variante de l'invention, elle est une composition comprenant au moins un mélange constitué d'un ciment anhydre conventionnel et d'eau.

Le ciment anhydre conventionnel est tel que défini dans le premier objet de l'invention.

Selon une deuxième variante de l'invention, la composition cimentaire est une composition comprenant au moins un mélange géopolymère (i.e. composition géopolymère), et de préférence au moins un mélange géopolymère aluminosilicate (i.e. composition géopolymère aluminosilicate).

Le mélange géopolymère aluminosilicate peut répondre à la composition molaire suivante (I) :

w SiO₂ : x Al₂O₃ : y M₂O : z H₂O (I)

dans laquelle :
- M est choisi parmi Na, K, Li, Cs et un de leurs mélanges,
- w est une valeur comprise entre 0,1 et 8 environ,
- x est une valeur comprise entre 0,1 et 0,3 environ,
- y est une valeur comprise entre 0,05 et 0,2 environ,
- z est une valeur comprise entre 0,8 et 3 environ,
ledit mélange comprenant de 40% à 79% en masse environ de matières solides (SiO₂, Al₂O₃, M₂O), par rapport à la masse totale dudit mélange géopolymère.

Le rapport massique eau/matière solides dans ledit mélange géopolymère détermine la cinétique de solidification lors de l'étape iii).

Selon une forme de réalisation préférée de l'invention, le rapport massique matières solides/eau varie de 0,6 à 1,65 environ, et encore plus préférentiellement de 0,85 à 1,40 environ. Un tel rapport massique permet d'avoir une composition cimentaire assez fluide pour permettre le remplissage des cellules ouvertes et/ou semi-ouvertes, et dont la cinétique de solidification est assez lente pour permettre un remplissage homogène d'un maximum de cellules avant sa solidification.

Le procédé peut comprendre en outre avant l'étape ii), une étape ii₀) de préparation d'une composition cimentaire comprenant au moins un mélange géopolymère, en particulier un mélange géopolymère aluminosilicate.

L'étape ii₀) est généralement effectuée à un pH élevé, notamment variant de 10 à 13 environ.

Lorsque la composition cimentaire comprend un mélange géopolymère aluminosilicate, l'étape ii₀) comprend de préférence les sous-étapes suivantes :
ii₀₋₁) une étape de préparation d'une solution aqueuse de silicate alcalin de rapport molaire SiO₂/M₂O allant de 1,65 à 3,4 environ, la concentration massique du silicate alcalin dans l'eau pouvant aller de 35 à 90% environ, et
ii₀₋₂) une étape de mélange d'un aluminosilicate sous forme de poudre de rapport molaire Al₂O₃/SiO₂ allant de 0,4 à 0,8 environ avec la solution aqueuse de silicate alcalin préparée à l'étape précédente, la concentration massique de l'aluminosilicate dans la solution aqueuse de silicate alcalin préparée à l'étape précédente pouvant aller de 10 à 80% environ, et de préférence de 25 à 65% environ.

L'aluminosilicate peut être choisi parmi le métakaolin (i.e. kaolin calciné), les cendres volantes (bien connues sous l'anglicisme « fly ash »), le laitier de haut fourneau (bien connu sous l'anglicisme « blast furnace slag »), les argiles gonflantes telles que la bentonite, les argiles calcinées, tout type de composé comprenant de l'aluminium et de la fumée de silice, les zéolithes et l'un de leurs mélanges. Parmi ces composés, le métakaolin est préféré, notamment celui commercialisé par la société Imérys.

La solution aqueuse de silicate alcalin peut être préparée en mélangeant du dioxyde de silicium SiO₂ ou un silicate alcalin avec une base MOH dans laquelle M est K ou Na.

Le dioxyde de silicium SiO₂ peut être choisi parmi la fumée de silice (i.e. silice pyrogénée), le quartz, et leurs mélanges.

Le silicate alcalin peut être choisi parmi les silicates de sodium, les silicates de potassium et l'un de leurs mélanges. Les silicates alcalins commercialisés par la société Silmaco et par la société PQ Corporation sont préférés.

La base MOH peut être choisie parmi KOH, NaOH et leurs mélanges.

L'étape ii₀₋₁) peut être effectuée en dissolvant la base dans de l'eau, entraînant un dégagement de chaleur (réaction exothermique), puis en ajoutant la silice (ou le silicate alcalin). La chaleur dégagée accélère alors la dissolution de la silice (ou du silicate alcalin) lors de l'étape ii₀₋₁) et de l'aluminosilicate lors de l'étape ii₀₋₂) et de ce fait la prise du mélange géopolymère, et ainsi de la composition cimentaire.

A l'issue de l'étape ii₀₋₂), la composition cimentaire présente une viscosité qui augmente avec le temps lorsqu'elle est exposée à l'air libre.

Selon une troisième variante de l'invention, la composition cimentaire est une composition comprenant au moins un mélange constitué d'un silicate de magnésium, d'un silicate alcalin, d'une base alcaline et d'eau.

La base alcaline peut être KOH ou NaOH ou leur mélange.

Le silicate alcalin peut être choisi parmi les silicates de sodium, les silicates de potassium et l'un de leurs mélanges. Les silicates alcalins commercialisés par la société Silmaco et par la société PQ Corporation sont préférés.

Le silicate de magnésium peut être du talc.

Dans l'invention, la composition cimentaire peut comprendre en outre au moins un agent retardant la prise en masse de la composition cimentaire et/ou au moins une charge inerte CI₁ et/ou au moins un dispersant et/ou au moins un composé accélérant la prise, les composés précités étant tels que définis dans le premier objet de l'invention.

Contrairement à la composition polymère organique, la composition cimentaire ne comprend pas de préférence d'agent moussant et/ou de co-agent d'expansion. En effet, le matériau cimentaire obtenu à partir de ladite composition cimentaire assure la cohésion de la couche composite, il est donc de préférence massif (i.e. présentant une porosité inférieure à 10% en volume environ).

L'étape ii) de remplissage est réalisée de préférence en immergeant l'élément conducteur allongé revêtu du matériau polymère organique comportant des cellules ouvertes et/ou semi-ouvertes de l'étape i) dans ladite composition cimentaire, ou en coulant la composition cimentaire sur l'élément conducteur allongé revêtu du matériau polymère organique comportant des cellules ouvertes et/ou semi-ouvertes de l'étape i).

L'étape ii) est de préférence réalisée en coulant la composition cimentaire sur l'élément conducteur allongé revêtu, notamment en faisant passer l'élément conducteur allongé revêtu du matériau polymère organique comportant des cellules ouvertes et/ou semi-ouvertes de l'étape i), au travers d'une chambre d'enduction.

L'étape ii) est réalisée de préférence sous pression, notamment à l'aide d'une cellule (ou chambre) d'enduction hermétique,et à une pression allant de 0,2 à 0,8 bar environ.

L'étape iii) de durcissement est généralement effectuée à température ambiante, puisque la polycondensation ou l'hydratation s'effectue à température ambiante.

L'étape iii) peut être un simple séchage du câble comprenant ladite couche composite électriquement isolante obtenu à l'étape ii).

La vitesse de durcissement de l'étape iii) peut aller de 30 à 300 minutes environ à 25°C environ (i.e. à la température ambiante).

Cependant, il est tout à fait possible de retarder le durcissement de l'étape iii) en ajoutant à la composition cimentaire au moins un agent retardateur de la prise en masse tel que défini dans le premier objet de l'invention. Comme indiqué précédemment, l'agent retardateur est de préférence choisi parmi les lignosulfonates.

Il est également possible d'accélérer le durcissement de la composition cimentaire en effectuant l'étape iii) à une température allant de 40°C à 70°C environ, notamment à l'aide d'un four à convection conventionnel, d'un four à infrarouge ou d'un four à micro-ondes.

L'accélération du durcissement peut également être effectuée à l'aide d'un composé accélérant la prise en masse tel que défini dans le premier objet de l'invention.

Le procédé peut comprendre en outre avant, pendant ou après l'étape iii), une étape iv) d'application d'une gaine externe de protection, notamment électriquement isolante autour de la couche composite électriquement isolante, ladite gaine étant telle que définie dans le premier objet de l'invention.

La réalisation de cette gaine extérieure de protection peut notamment être réalisée par extrusion, et de préférence avant l'étape iii).

Les exemples suivants permettent d'illustrer la présente invention. Ils n'ont pas de caractère limitatif sur la portée globale de l'invention telle que présentée dans les revendications. Les rapports entre les oxydes sont des rapports molaires et les % indiqués sont en masse.

### EXEMPLES

Les matières premières utilisées dans les exemples, sont listées ci-après :
- bentonite, BYK, Optibent 616,
- copolymère d'éthylène et d'acétate de vinyle, EVA UL 00328, ExxonMobil ou Evatane 2803, Arkema
- colorant gris, PolyOne OnColor™,
- solution aqueuse de silicate de sodium à 50% massique environ de type « *waterglass* », Simalco, de formule Na₂O.2SiO₂ et de rapport molaire SiO₂/Na₂O de 2 environ,
- eau courante,
- hydroxyde de sodium, Sigma Aldrich, de pureté > 85%,
- aluminosilicate, PoleStar®200R, Imerys, de rapport molaire Al₂O₃/SiO₂ de 41/55 (i.e. de 0,745 environ).

Sauf indications contraires, toutes ces matières premières ont été utilisées telles que reçues des fabricants.

### Exemple 1 : préparation d'un câble résistant au feu conforme à l'invention

### 1.1. Préparation d'un élément électriquement conducteur allongé revêtu d'un matériau polymère organique comportant des cellules ouvertes (étape i)

Le tableau 1 ci-dessous rassemble les composés utilisés dans la composition polymère organique de l'étape i), pour former un matériau polymère organique autour d'un élément électriquement conducteur allongé.

Les quantités des composés sont présentées dans le tableau 1 ci-dessous et sont exprimées en % en masse par rapport à la masse totale de la composition.

**TABLEAU 1**

| **Composés** | **% en masse** |
|---|---|
| EVA UL 00328 | 90,74 |
| Bentonite | 9,08 |
| Colorant gris | 0,18 |

La composition polymère organique a été extrudée à chaud autour d'un élément électriquement conducteur allongé en cuivre de section 1,5 mm² à l'aide d'une extrudeuse vendue sous la dénomination commerciale FAIREX. La température au sein de l'extrudeuse allait de 70°C à 225°C environ.

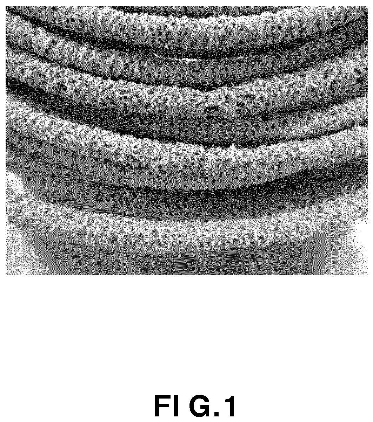

La figure 1 représente le câble tel qu'obtenu à l'issue de l'étape i). Ledit câble comprend un élément électriquement conducteur allongé entouré par un matériau polymère organique à base d'EVA comportant des cellules ouvertes, notamment majoritairement localisées en surface dudit élément électriquement conducteur allongé.

### 1.2. Préparation d'un mélange géopolymère aluminosilicate à titre de composition cimentaire (étape ii₀).

Une solution de silicate alcalin est préparée en mélangeant 36 g d'une solution aqueuse de silicate de sodium, 20 g d'eau et 8 g d'hydroxyde de sodium. Puis 29 g d'aluminosilicate et 10 g de talc ont été mélangés avec la solution de silicate alcalin pour former une composition géopolymère aluminosilicate.

Ledit mélange géopolymère aluminosilicate comprenait 68% en masse environ de matières solides par rapport à la masse totale de ladite composition.

Le mélange géopolymère aluminosilicate avait la composition molaire de formule (I) suivante :

0,274 SiO₂ : 0,128 Al₂O₃ : 0,179 Na₂O : 0,915 H₂O (I)

### 1.3. Remplissage des cellules ouvertes du matériau organique polymère par la composition cimentaire (étape ii)

L'étape ii) a été effectuée selon le mode opératoire suivant : en sortie d'extrudeuse, le matériau polymère organique expansé a été convoyé dans un système d'enduction composé d'une chambre maintenue sous une pression de 0,6 bar et fermée à ses deux extrémités par un jeu de filière de diamètre égal au diamètre du câble.

Le câble comprenant la couche composite a alors été séché à température ambiante pendant 2 heures (étape iii)). La couche composite avait une épaisseur de 0,2 mm environ.

### 1.4. Performances du câble de l'invention

La couche composite du câble conforme à l'invention a été évaluée au regard des performances de résistance à la flamme et de la cohésion. Le câble tel qu'obtenu dans l'exemple 1.3, et à titre comparatif un câble non conforme à l'invention comprenant à la place de la couche composite de l'invention, une couche constituée uniquement de copolymère EVA UL 00328 à titre de matériau polymère organique et sans matériau cimentaire, ont été soumis au test de propagation de la flamme. Ce test a été effectué selon la norme IEC 600332-1 et consiste à exposer le câble à une flamme de puissance 1 kW environ pendant 60 secondes environ.

Les résultats de ce test sont présentés dans le tableau 2 ci-dessous :

**TABLEAU 2**

| **Câble** | **Hauteur de la flamme** (en mm) | **Durée de la flamme** (en min) |
|---|---|---|
| Câble conforme à l'invention de l'exemple 1.3 | 105,00 | 1,25 |
| Câble non conforme à l'invention | 360,00 | 4,02 |

Les résultats présentés dans le tableau 2 confirment la résistance au feu du câble de l'invention. Par ailleurs, après le test, la couche composite du câble conforme à l'invention présente une bonne cohésion, n'est pas friable et ne propage pas l'incendie.

### Exemple 2 : préparation d'un câble résistant au feu conforme à l'invention

Un câble conforme à l'invention a été préparé comme dans l'exemple 1, en utilisant la même composition polymère organique que dans l'exemple 1.1 et en remplaçant le mélange géopolymère aluminosilicate de l'exemple 1.2 par une composition cimentaire comprenant au moins un mélange constitué d'un silicate de magnésium, d'un silicate alcalin, d'une base alcaline et d'eau.

La composition cimentaire a été préparée de la façon suivante [étape ii)] : une solution de silicate alcalin est préparée en mélangeant 36 g d'une solution aqueuse de silicate de sodium, 20 g d'eau et 8 g d'hydroxyde de sodium. Puis 39 g de talc ont été mélangés avec la solution de silicate alcalin pour former une composition cimentaire.

Les étapes ii) et iii) ont été effectuées comme dans l'exemple 1.2. La couche composite avait une épaisseur de 0,2 mm environ.

Elle a été évaluée au regard des performances de résistance à la flamme et de la cohésion comme dans l'exemple 1.4. Les résultats de ce test sont présentés dans le tableau 3 ci-dessous :

**TABLEAU 3**

| **Câble** | **Hauteur de la flamme** (en mm) | **Durée de la flamme** (en min) |
|---|---|---|
| Câble conforme à l'invention de l'exemple 2 | 105,00 | 1,49 |

Les résultats présentés dans le tableau 3 confirment la résistance au feu du câble de l'invention. Par ailleurs, après le test, la couche composite du câble conforme à l'invention présente une bonne cohésion, n'est pas friable et ne propage pas l'incendie.

## Revendications

1. Câble d'énergie et/ou de télécommunication comprenant au moins un élément conducteur allongé et au moins une couche composite électriquement isolante entourant ledit élément conducteur allongé, **caractérisé en ce que** la couche composite électriquement isolante comprend un matériau polymère organique comportant des cellules ouvertes et/ou semi-ouvertes, et un matériau cimentaire remplissant au moins une partie desdites cellules ouvertes et/ou semi-ouvertes.

2. Câble selon la revendication 1, **caractérisé en ce que** le matériau cimentaire comprend du silicium (Si), de l'aluminium (Al) ou du magnésium (Mg), de l'oxygène (O) et au moins un élément choisi parmi le potassium (K), le sodium (Na), le lithium (Li), le césium (Cs) et le calcium (Ca).

3. Câble selon la revendication 1 ou 2, **caractérisé en ce que** le matériau cimentaire comprend un ciment géopolymère, ou est issu d'au moins un mélange constitué d'un ciment anhydre conventionnel et d'eau ou d'au moins un mélange constitué d'un silicate alcalin, d'un silicate de magnésium, d'une base alcaline et d'eau.

4. Câble selon l'une quelconque des revendications précédentes, **caractérisé en ce que** la couche composite électriquement isolante présente une épaisseur allant de 0,1 à 3 mm.

5. Câble selon l'une quelconque des revendications précédentes, **caractérisé en ce que** le matériau cimentaire représente de 30 à 80% en masse, par rapport à la masse totale de ladite couche composite électriquement isolante.

6. Câble selon l'une quelconque des revendications précédentes, **caractérisé en ce que** le matériau polymère organique comprend un ou plusieurs polymère(s) organique(s) PO₁ choisis parmi les polyéthylènes linéaires basse densité ; les polyéthylènes très basse densité ; les polyéthylènes basse densité ; les polyéthylènes moyenne densité ; les polyéthylènes haute densité ; les copolymères d'éthylène-propylène ; les terpolymères éthylène propylène diène monomères ; les copolymères d'éthylène et de vinyle ester ; les copolymères d'éthylène et d'acrylate ; les copolymères d'éthylène et d'alpha-oléfine ; les polymères d'oléfine fonctionnalisés ; les polypropylènes ; les copolymères du propylène ; les copolymères de styrène-butadiène ; les copolymères de styrène-butadiène-éthylène ; et tous les dérivés des copolymères de styrène-éthylène.

7. Câble selon l'une quelconque des revendications précédentes, **caractérisé en ce que** le matériau polymère organique comprend en outre au moins une charge inerte Cl₂.

8. Câble selon l'une quelconque des revendications précédentes, **caractérisé en ce que** la couche composite électriquement isolante est une couche interne du câble.

9. Câble selon l'une quelconque des revendications précédentes, **caractérisé en ce que** la couche composite électriquement isolante est en contact physique direct avec l'élément conducteur allongé.

10. Câble selon l'une quelconque des revendications précédentes, **caractérisé en ce qu'**il comprend en outre une gaine externe de protection entourant la ou les couche(s) composite(s).

11. Procédé de fabrication d'un câble tel que défini à l'une quelconque des revendications 1 à 10, **caractérisé en ce qu'**il comprend au moins les étapes suivantes :
i) la formation d'un matériau polymère organique comportant des cellules ouvertes et/ou semi-ouvertes autour d'au moins un élément conducteur allongé, à partir d'une composition polymère organique comprenant au moins un polymère organique PO₁ et au moins un agent moussant,
ii) le remplissage d'au moins une partie desdites cellules ouvertes et/ou semi-ouvertes par une composition cimentaire, et
iii) le durcissement de la composition cimentaire pour former une couche composite électriquement isolante telle que définie à l'une quelconque des revendications 1 à 9.

12. Procédé selon la revendication 11, **caractérisé en ce que** l'étape i) est effectuée par extrusion à chaud de ladite composition polymère organique.

13. Procédé selon la revendication 11 ou 12, **caractérisé en ce que** l'agent moussant est choisi parmi les phyllosilicates hydratés et d'autres argiles gonflantes.

14. Procédé selon l'une quelconque des revendications 11 à 13, **caractérisé en ce que** la composition polymère organique de l'étape i) comprend au moins 2% en masse d'agent moussant, par rapport à la masse totale de ladite composition polymère organique.

15. Procédé selon l'une quelconque des revendications 11 à 14, **caractérisé en ce que** la composition cimentaire de l'étape ii) comprend de l'eau, du silicium (Si), de l'aluminium (Al) ou du magnésium (Mg), de l'oxygène (O) et au moins un élément choisi parmi le potassium (K), le sodium (Na), le lithium (Li), le césium (Cs) et le calcium (Ca).

16. Procédé selon l'une quelconque des revendications 11 à 15, **caractérisé en ce que** la composition cimentaire est une composition comprenant au moins un mélange géopolymère ou une composition comprenant au moins un mélange constitué d'un ciment anhydre conventionnel et d'eau ou une composition comprenant au moins un mélange constitué d'un silicate alcalin, d'un silicate de magnésium, d'une base alcaline et d'eau.

17. Procédé selon l'une quelconque des revendications 11 à 16, **caractérisé en ce que** l'étape ii) de remplissage est réalisée en immergeant l'élément conducteur allongé revêtu du matériau polymère organique comportant des cellules ouvertes et/ou semi-ouvertes de l'étape i) dans ladite composition cimentaire, ou en coulant la composition cimentaire sur l'élément conducteur allongé revêtu du matériau polymère organique comportant des cellules ouvertes et/ou semi-ouvertes de l'étape i).

## Patentansprüche

1. Energie- und/oder Telekommunikationskabel, umfassend mindestens ein längliches leitendes Element und mindestens eine elektrisch isolierende Kompositschicht, die das längliche leitende Element umgibt, **dadurch gekennzeichnet, dass** die elektrisch isolierende Kompositschicht ein organisches Polymermaterial umfasst, das offene und/oder halboffene Zellen aufweist, und ein Zementmaterial, das mindestens einen Teil der offenen und/oder halboffenen Zellen füllt.

2. Kabel nach Anspruch 1, **dadurch gekennzeichnet, dass** das Zementmaterial Silicium (Si), Aluminium (Al) oder Magnesium (Mg), Sauerstoff (O) und mindestens ein Element umfasst, das aus Kalium (K), Natrium (Na), Lithium (Li), Cäsium (Cs) und Calcium (Ca) ausgewählt ist.

3. Kabel nach Anspruch 1 oder 2, **dadurch gekennzeichnet, dass** das Zementmaterial einen geopolymeren Zement umfasst oder aus mindestens einem Gemisch hervorgegangen ist, das aus einem Alcalisilicat, einem Magnesiumsilicat, einer Alkalibase und Wasser besteht.

4. Kabel nach einem der vorangehenden Ansprüche, **dadurch gekennzeichnet, dass** die elektrisch isolierende Kompositschicht eine Dicke von 0,1 bis 3 mm aufweist.

5. Kabel nach einem der vorangehenden Ansprüche, **dadurch gekennzeichnet, dass** das Zementmaterial 30 bis 80 Ma% in Bezug auf die Gesamtmasse der elektrisch isolierenden Kompositschicht darstellt.

6. Kabel nach einem der vorangehenden Ansprüche, **dadurch gekennzeichnet, dass** das organische Polymermaterial ein oder mehrere organische/s Polymer/e PO₁ umfasst, das/die aus den linearen Polyethylenen niederer Dichte; den Polyethylenen sehr niedriger Dichte; den Polyethylenen niederer Dichte; den Polyethylenen mittlerer Dichte; den Polyethylenen hoher Dichte; den Ethylen-Propylen-Copolymeren; den Ethylen-Propylen-Dien-Monomer-Terpolymeren; den Ethylen- und Vinylester-Copolymeren; den Ethylen- und Acrylat-Copolymeren; den Ethylen- und Alphaolefin-Copolymeren; den funktionalisierten Olefinpolymeren; den Polypropylenen; den Propylen-Copolymeren; den Styrol-Butadien-Copolymeren; den Styrol-Butadien-Ethylen-Copolymeren und allen Derivaten der Styrol-EthylenCopolymere ausgewählt sind.

7. Kabel nach einem der vorangehenden Ansprüche, **dadurch gekennzeichnet, dass** das organische Polymermaterial ferner mindestens einen inerten Füllstoff Cl₂ umfasst.

8. Kabel nach einem der vorangehenden Ansprüche, **dadurch gekennzeichnet, dass** die elektrisch isolierende Kompositschicht eine innere Schicht des Kabels ist.

9. Kabel nach einem der vorangehenden Ansprüche, **dadurch gekennzeichnet, dass** die elektrisch isolierende Kompositschicht in direktem physischem Kontakt mit dem länglichen leitenden Element ist.

10. Kabel nach einem der vorangehenden Ansprüche, **dadurch gekennzeichnet, dass** es ferner eine äußere Schutzhülle umfasst, die die Kompositschicht/en umgibt.

11. Verfahren zur Herstellung eines Kabels wie definiert nach einem der Ansprüche 1 bis 10, **dadurch gekennzeichnet, dass** mindestens die folgenden Schritte umfasst:
i) Bilden eines organischen Polymermaterials, das offene und/oder halboffene Zellen um mindestens ein längliches leitendes Element aufweist, aus einer organischen Polymerzusammensetzung, umfassend mindestens ein organisches Polymer PO₁ und mindestens einen Schaumbildner,
ii) Füllen mindestens eines Teils der offenen und/oder halboffenen Zellen mit einer Zementzusammensetzung, und
iii) Härten der Zementzusammensetzung, um eine elektrisch isolierende Kompositschicht wie definiert nach einem der Ansprüche 1 bis 9 zu bilden.

12. Verfahren nach Anspruch 11, **dadurch gekennzeichnet, dass** der Schritt i) durch Heißextrudieren der organischen Polymerzusammensetzung durchgeführt wird.

13. Verfahren nach Anspruch 11 oder 12, **dadurch gekennzeichnet, dass** der Schaumbildner aus den hydratisierten Phyllosilicaten und anderen Blähtonen ausgewählt ist.

14. Verfahren nach einem der Ansprüche 11 bis 13, **dadurch gekennzeichnet, dass** die organische Polymerzusammensetzung von Schritt i) mindestens 2 Ma% Schaumbildner in Bezug auf die Gesamtmasse der organischen Polymerzusammensetzung umfasst.

15. Verfahren nach einem der Ansprüche 11 bis 14, **dadurch gekennzeichnet, dass** die Zementzusammensetzung von Schritt ii) Wasser, Silicium (Si), Aluminium (Al) oder Magnesium (Mg), Sauerstoff (O) und mindestens ein Element umfasst, das aus Kalium (K), Natrium (Na), Lithium (Li), Cäsium (Cs) und Calcium (Ca) ausgewählt ist.

16. Verfahren nach einem der Ansprüche 11 bis 15, **dadurch gekennzeichnet, dass** die Zementzusammensetzung eine Zusammensetzung ist, die mindestens ein Geopolymergemisch umfasst oder eine Zusammensetzung, die mindestens ein Gemisch umfasst, das aus einem konventionellen wasserfreien Zement und Wasser besteht oder eine Zusammensetzung, die mindestens ein Gemisch umfasst, das aus einem Alkalisilicat, einem Magnesiumsilicat, einer Alkalibase und Wasser besteht.

17. Verfahren nach einem der Ansprüche 11 bis 16, **dadurch gekennzeichnet, dass** der Schritt ii) des Füllens durch Eintauchen des länglichen leitenden Elements, das mit organischem Polymermaterial beschichtet ist, das offene und/oder halboffene Zellen aufweist, von Schritt i) in die Zementzusammensetzung oder durch Gießen der Zementzusammensetzung über das längliche leitende Element, das mit organischem Polymermaterial beschichtet ist, das offene und/oder halboffene Zellen aufweist, von Schritt i) durchgeführt wird.

## Claims

1. Power and/or telecommunications cable comprising at least one elongate conductive element and at least one composite electrically isolating layer surrounding said elongate conductive element, **characterized in that** the composite electrically isolating layer comprises an organic polymer material comprising open and/or semi-open cells, and a cement material filling at least part of said open and/or semi-open cells.

2. The cable according to claim 1, **characterized in that** the cement material comprises silicon (Si), aluminium (Al) or magnesium (Mg), oxygen (O) and at least one element selected from among potassium (K), sodium (Na), lithium (Li), caesium (Cs) and calcium (Ca).

3. The cable according to claim 1 or 2, **characterized in that** the cement material comprises a geopolymer cement, or is derived from at least one mixture composed of a conventional anhydrous cement and water, or from at least one mixture composed of an alkaline silicate, a magnesium silicate, an alkaline base and water.

4. The cable according to any of the preceding clams, **characterized in that** the composite electrically isolating layer has a thickness ranging from 0.1 to 3 mm.

5. The cable according to any of the preceding claims, **characterized in that** the cement material represents from 30 to 80 weight % relative to the total weight of said composite electrically isolating layer.

6. The cable according to any of the preceding claims, **characterized in that** the organic polymer material comprises one or more organic polymers PO₁ selected from among linear low-density polyethylenes; very low-density polyethylenes; low-density polyethylenes; medium-density polyethylenes; high-density polyethylenes; ethylene-propylene copolymers; ethylene propylene diene monomer terpolymers; ethylene and vinyl ester copolymers; ethylene and acrylate copolymers; ethylene and alpha-olefin copolymers; functionalized olefin polymers; polypropylenes; propylene copolymers; styrene-butadiene copolymers; styrene-butadiene-ethylene copolymers; and all derivatives of styrene-ethylene copolymers.

7. The cable according to any of the preceding claims, **characterized in that** the organic polymer material also comprises at least one inert Cl₂ filler.

8. The cable according to any of the preceding claims, **characterized in that** the composite electrically isolating layer is an inner layer of the cable.

9. The cable according to any of the preceding claims, **characterized in that** the composite electrically isolating layer is in direct physical contact with the elongate conductive element.

10. The cable according to any of the preceding claims, **characterized in that** it also comprises an outer protective sheath surrounding the composite layer(s).

11. Method for manufacturing a cable such as defined in any of claims 1 to 10, **characterised in that** it comprises at least the following steps:
i) forming an organic polymer material comprising open and/or semi-open cells around at least one elongate conductive element, from an organic polymer composition comprising at least one organic polymer PO₁ and at least one foaming agent;
ii) filling at least part of said open and/or semi-open cells with a cement composition; and
iii) setting the cement composition to form a composite electrically isolating layer such as defined in any of claims 1 to 9.

12. The method according to claim 11, **characterized in that** step i) is performed via hot extrusion of said organic polymer composition.

13. The method according to claim 11 or 12, **characterized in that** the foaming agent is selected from among hydrated phyllosilicates and other expansive clays.

14. The method according to any of claims 11 to 13, **characterized in that** the organic polymer composition at step i) comprises at least 2 weight % of foaming agent relative to the total weight of said organic polymer composition.

15. The method according to any of claims 11 to 14, **characterized in that** the cement composition at step ii) comprises water, silicon (Si), aluminium (Al) or magnesium (Mg), oxygen (O) and at least one element selected from among potassium (K), sodium (Na), lithium (Li), caesium (Cs) and calcium (Ca).

16. The method according to any of claims 11 to 15, **characterized in that** the cement composition is a composition comprising at least one geopolymer mixture, or a composition comprising at least one mixture composed of a conventional anhydrous cement and water, or a composition comprising at least one mixture composed of an alkaline silicate, a magnesium silicate, an alkaline base and water.

17. The method according to any of claims 11 to 16, **characterized in that** the filling step ii) is performed by immersing the elongate conductive element coated with the organic polymer material of step i) comprising open and/or semi-open cells in said cement composition, or by pouring the cement composition onto the elongate conductive element coated with the organic polymer material of step i) comprising open and/or semi-open cells.
